# EUROPEAN PATENT SPECIFICATION

(11) **EP 0 396 183 B1**
(45) Date of publication and mention of the grant of the patent: **06.07.1994**
(21) Application number: 90201053.7
(22) Date of filing: 26.04.1990
(51) Int. Cl.: B62J 9/00

(54) **Cycle bag and plate and hook associated therewith**
Fahrradtasche mit einer Platte und ein damit verbundener Haken
Sacoche de vélo, plateau et crochet associé

(30) Priority: 03.05.1989 NL 8901122
(43) Date of publication of application: 07.11.1990
(73) Proprietor: HESLING PRODUCTS B.V., NL-5351 AB BERGHEM (NL)
(72) Inventor: Hesling, Fransiscus Johannes Sybrandus, NL-5351 AB Berhem (NL)
(74) Representative: Van kan, Johan Joseph Hubert, Ir.

(56) References cited:
- NL-A- 6 512 498
- US-A- 4 271 996

## Description

The invention relates to a cycle bag which can be mounted on a luggare carrier of a bicycle or the like, said cycle bag having two mounting hooks, said mounting hooks being provided on a plate that extends along substantially the entire area of the rear wall of said cycle bag.

Such a cycle bag is known from US patent 4,271,996 whereby in the bag a frame has been provided and hooks having an inverted U shape are fastened to said frame by screws. With such a construction it is quite inconvenient to use such a cycle bag for shopping because of the extending hooks. Another construction of a cycle bag is known from Dutch patent application 6512498, wherein hooks with an inverted U-shape have been provided with extensions which are accommodated in bushings mounted on a frame in the bag in such a way that said hooks and their extensions can move up and down and can be pivoted about the longitudinal axes of said extensions. The cycle bag according to Dutch patent application 6412498 has the disadvantage that the construction is relatively unstable and cumbersome and that the movable hooks are liable to wear.

These problems are now solved by a cycle bag according to the invention of the kind set forth wherein each of the mounting hooks is F⁻ shaped and the upper horizontal part of each mounting hook has been coupled with a projection on the rear wall so as to be pivotable about an upwardly extending pivot axis between an inoperative position wherein the mounting hook lies parallel to the plate and a position wherein the mounting hook extends substantially perpendicular to the plate.

The structure according to the invention has been chosen such that the cycle bag can also be used as a shopping bag or as a school bag, whereby the hooks can be easily swung aside and do not form an undesirable hindrance.

The invention will be further explained by means of the following description, whereby reference is made to the appended drawing, in which:
Figure 1 shows a cycle bag according to the invention;
Figure 2 shows a plate to be provided in the cycle bag, on which there are provided hooks;
Figure 3 shows an elevational view of a hook; and
Figure 4 shows a section of a hook provided on the plate of Figure 2.

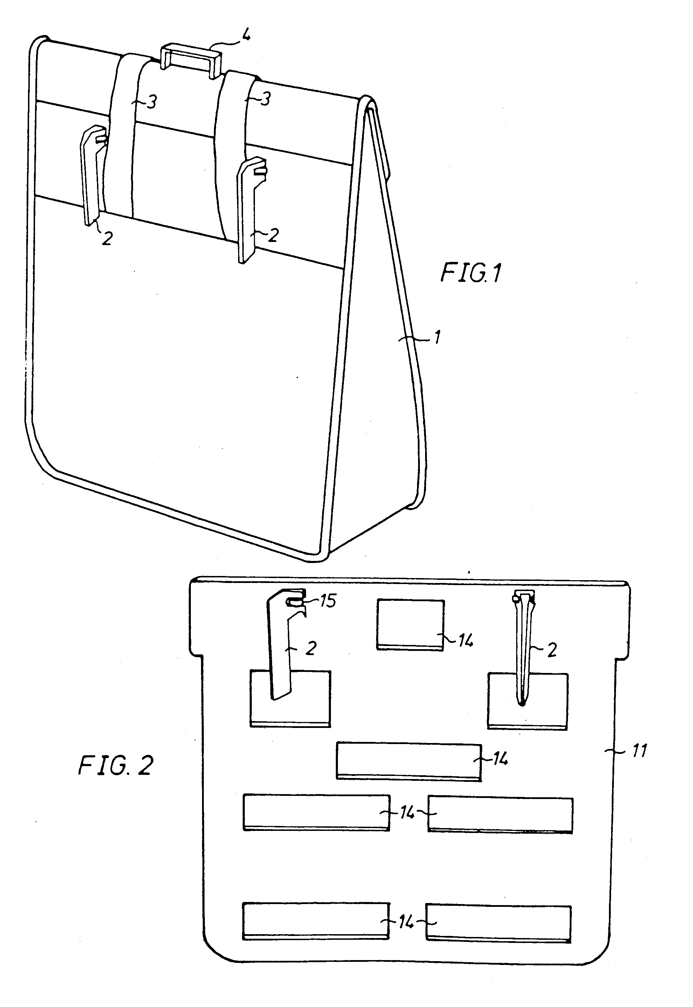

Figure 1 illustrates a cycle bag/shopping bag/school bag 1, in particular the rear side of the bag with hooks 2, by which the bag can be mounted on the luggage carrier of a bicycle, and furthermore straps 3 and a handle 4. It will be apparent that said straps 3 need not be present when a handle 4 is present, and vice versa.

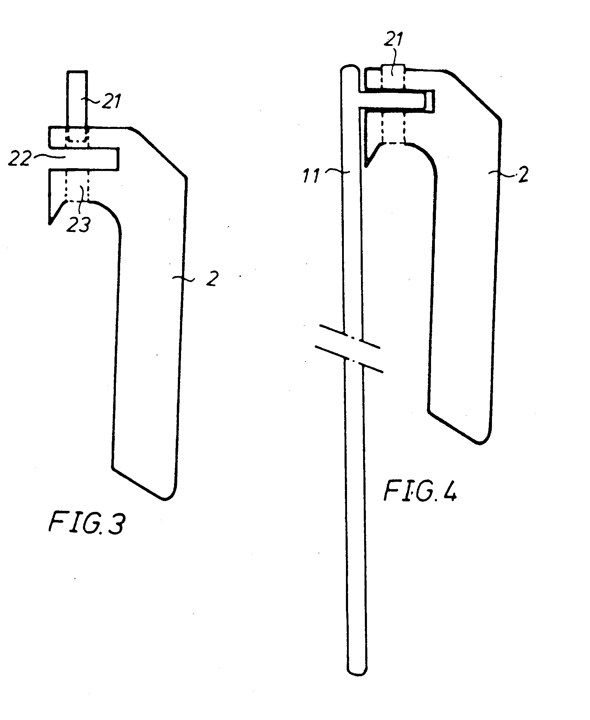

Figure 2 illustrates the plate which is provided in the rear side, of the cycle bag, the hooks 2 being provided on said plate 11. In Figure 2 one hook 2 is shown in the swung-aside position and the other hook 2 is shown in the folded-out position. The plate, and with it the cycle bag, can be mounted on the luggage carrier by means of the hooks 2 when said hooks are in said folded-out position. In order not to make the cycle bag unnecessarily heavy the plate is made of a polymer, preferably polypropene, and is provided with holes 14, so that the sturdiness of the plate is maintained while its weight is being reduced. Reference number 15 illustrates a circular projection on the plate for mounting the hook 2 on the plate 11. Said projection 15 may be fitted into an opening 22 of the hook, as is illustrated in Figure 3, and through said projection there is passed a pin 21, which is also passed through opening 23 in hook 2, as is illustrated in Figure 3.

Figure 4 illustrates a section of the plate 11 and the hook 2 in folded-out condition.

Because of the design of the hooks 2 an integrated unit, with regard to materials, colour combination and shape, can be formed with the handle 4 and the fasteners (not shown) on the front of the bag.

It will be apparent that the cycle bag and the plate and further accessories for the cycle bag are not limited to a specific selection of materials, colour combination or embodiment of the bag, but that any limitations can only be derived from the appended claims. By providing the plate in the bag also the mechanic sturdiness of the bag is improved with respect to the known cycle bags of this type.

## Claims

1. A cycle bag (1) which can be mounted on a luggage carrier of a bicycle or the like, said cycle bag (1) having two mounting hooks (2), said mounting hooks (2) being provided on a plate (11) that extends along substantially the entire area of the rear wall of said cycle bag (1), characterized in that each of the mounting hooks (2) is F⁻ shaped and the upper horizontal part of each f^{*} shaped mounting hook (2) has been coupled with a projection (15) on the rear wall so as to be pivotable about an upwardly extending pivot axis (21) between an inoperative position wherein the mounting hook (2) lies parallel to the plate (11) and a position wherein the mounting hook extends substantially perpendicular to the plate (11).

2. Plate (11) provided with projections (15) and ┌ shaped mounting hooks (2) pivotally coupled with said projections (15) intended for use in a cycle bag according claim 1.

## Patentansprüche

1. Fahrradtasche (1), die an einem Gepäckträger eines Fahrrads o.dgl. angebracht werden kann, wobei die Fahrradtasche (1) zwei Befestigungshaken (2) aufweist, die an einer Platte (11) vorgesehen sind, die sich im wesentlichen entlang der gesamten Fläche der Rückwand der Fahrradtasche (1) erstreckt,
dadurch gekennzeichnet, daß jeder der Befestigungshaken (2) rgeformt ist und das obere horizontale Teil jedes ┌geformten Befestigungshakens (2) mit einem Vorsprung (15) an die Rückwand gekuppelt ist zum Verschwenken um eine sich nach oben erstreckende Schwenkachse (21) zwischen einer inaktiven Stellung, in welcher der Befestigungshaken (2) zur Platte (11) parallel angeordnet ist, und einer Stellung, in welcher der Befestigungshaken (2) sich im wesentlichen senkrecht zur Platte (11) erstreckt.

2. Platte (11), die mit Vorsprüngen (15) und ┌geformten Befestigungshaken (2) versehen ist, die schwenkbar mit den Vorsprüngen (15) gekuppelt und zur Verwendung bei einer Fahrradtasche nach Anspruch 1 vorgesehen ist.

## Revendications

1. Une sacoche de bicyclette (1) pouvant être montée sur un porte-bagages d'une bicyclette ou autre, cette sacoche de bicyclette (1) comportant deux crochets de montage (2), ces crochets de montage (2) étant formés sur une plaque (11) qui s'étend sur la presque totalité de l'étendue de la paroi arrière de la sacoche de bicyclette (1), caractérisée en ce que chacun des crochets de montage (2) a une forme en 1, et la partie horizontale supérieure de chaque crochet de montage (2) en forme de ┌ a été accouplée à une saillie (15) sur la paroi arrière, de façon à pouvoir pivoter autour d'un axe de pivotement (21) s'étendant vers le haut, entre une position inactive dans laquelle le crochet de montage (2) s'étend parallèlement à la plaque (11), et une position dans laquelle le crochet de montage s'étend pratiquement perpendiculairement à la plaque (11).

2. Plaque (11) comportant des saillies (15) et des crochets de montage (2) ayant une forme en 1, accouplés de façon pivotantes aux saillies (15), prévue pour l'utilisation dans une sacoche de bicyclette selon la revendication 1.
